# EUROPÄISCHE PATENTSCHRIFT

(11) **EP 0 372 382 B1**
(45) Veröffentlichungstag und Bekanntmachung des Hinweises auf die Patenterteilung: **15.11.1995**
(21) Anmeldenummer: 89122061.8
(22) Anmeldetag: 29.11.1989
(51) Int. Cl.: C04B 35/58

(54) **Sinterfähiges Keramikpulver, Verfahren zu seiner Herstellung, daraus hergestellte Siliziumnitridkeramik, Verfahren zu deren Herstellung sowie deren Verwendung**
Sinterable ceramic powder, method of making same, a silicon nitride ceramic material made thereof, method of making them and their use
Poudres frittables en céramique, procédé de leur fabrication et céramique en nitrure de silicium obtenue, son procédé de fabrication et son utilisation

(30) Priorität: 03.12.1988 DE 3840773
(43) Veröffentlichungstag der Anmeldung: 13.06.1990
(73) Patentinhaber: HOECHST AKTIENGESELLSCHAFT, 65926 Frankfurt am Main (DE)
(72) Erfinder: Peuckert, Marcellus, Dr., D-6238 Hofheim am Taunus (DE); Brück, Martin, D-6238 Hofheim am Taunus (DE); Gerdau, Thomas, Dr., D-6239 Eppstein/Taunus (DE); Kleiner, Hans-Jerg, Dr., D-6242 Kronberg/Taunus (DE); Vaahs, Tilo, Dr., D-6233 Kelkheim(Taunus) (DE); Aldinger, Fritz, Dr., D-6458 Rodenbach (DE); Petzow, Günter, Dr., D-7022 Leinfelden (DE); Riedel, Ralf, Dr., D-7022 Leinfelden (DE); Seher, Martin, D-7000 Stuttgart (DE)

(56) Entgegenhaltungen:
- FR-A- 2 197 829
- US-A- 4 482 669
- CHEMICAL ABSTRACTS, Band 110, Nr. 8, 17. April 1989, Seite 324, Zusammenfassung Nr. 140358n, Columbus, Ohio, US; & JP-A-63 242 962
- ADVANCED CERAMIC MATERIALS, Band 3, Nr. 4, Juli 1988, Seiten 320-323, Westerville, OH, US; K.B. SCHWARTZ et al.: "Microstructural development in Si3N4/polysilazane bodies during heating"
- CHEMICAL ABSTRACTS, Band 108, Nr. 20, Mai 1988, Seite 314, Zusammenfassung Nr. 172382r, Columbus, Ohio, US; & JP-A-63 21 253
- CHEMICAL ABSTRACTS, Band 108, Nr. 20, Mai 1988, Seite 314, Zusammenfassung Nr. 172384t, Columbus, Ohio, US; & JP-A-63 25 276

## Beschreibung

Die Erfindung betrifft ein neues sinterfähiges Keramikpulver, seine Herstellung und eine Weiterverarbeitung zu Siliziumnitridkeramik.

Reines Si₃N₄-Pulver kann im allgemeinen drucklos bei 1850°C oder unter Anwendung von Druck bei höheren Temperaturen jeweils durch Zusatz oxidischer Sinterhilfsmittel wie beispielsweise Aluminiumoxid, Siliciumoxid, Magnesiumoxid oder Yttriumoxid bis zur theoretischen Dichte verdichtet werden.

Im Gegensatz dazu erweist sich die vollständige Verdichtung von Si₃N₄/SiC-Mischpulver als wesentlich schwieriger und gelingt meist nur durch Heißpressen.

Eine gute Reproduzierbarkeit der mechanischen und physikalischen Eigenschaften von Dispersionswerkstoffen hängt wesentlich von der homogenen Verteilung der einzelnen Phasen im Gefüge ab. Die gleichmäßige Verteilung sowohl der Dispersionsphase als auch der Sinterhilfsmittel bereitet bei der konventionellen Herstellung von Mischkeramiken aus pulverförmigem Si₃N₄, SiC und Sinterhilfsmitteln im allgemeinen große Schwierigkeiten und bedarf aufwendiger Misch- und Mahlprozesse der entsprechenden Pulvermischungen. Deshalb werden Verfahren gesucht, die eine Verbesserung der Verteilung der unterschiedlichen Teilchen in den Ausgangspulvern gewährleisten.

Eine Möglichkeit zur homogeneren Verteilung zweier oder mehrerer Phasen bietet die Abscheidung der Sinterhilfsmitel auf ein Keramikpulver, wie etwa SiC-Pulver, aus einer Lösungsphase. Hierzu wird z.B. SiC-Pulver zunächst in einem Suspensionsmittel dispergiert, in welchem Sinterhilfsmittel in Form von Salzen, metallorganischen Verbindungen oder anorganischen Polymeren gelöst vorliegen. Die gelösten Sinterhilfsmittel werden dann beispielsweise durch Entzug des Lösungsmittel auf die SiC-Teilchen niedergeschlagen (DE-C-28 56 593). Durch thermische Zersetzung werden die Sinterhilfsmittel anschließend in die entsprechenden keramischen Phasen umgewandelt.

Aus Chemical Abstracts 108:172384t und 110:140358n sowie Advanced Ceramic Materials, Band 3, Nr.4, 1988, S. 320-323 ist die Herstellung von Si₃N₄-Keramik aus Mischungen bekannt, die überwiegend aus Si₃N₄-Pulver (über 70%) sowie Polysilazan und Sinterhilfsmittel bestehen.

Eine Aufgabe der vorliegenden Erfindung besteht darin, ein Verfahren bereitzustellen, das die Synthese eines sinterfähigen Si₃N₄- oder Si₃N₄/SiC-Pulvers, in dem sowohl die Si₃N₄- und SiC-Teilchen als auch die Sinterhilfsmittel extrem gut verteilt sind, zu gewährleisten.

Die erfindungsgemäße Lösung dieser Aufgabe besteht darin, daß als Si₃N₄- bzw. SiC-Quelle eine Si, C, H und N enthaltende polymere Verbindung, ein organisch substituiertes Polysilazan, verwendet und auf einem pulverförmigen Sinterhilfsmittel niedergeschlagen wird. Anschließend erfolgt eine Pyrolyse.

Ein Gegenstand der vorliegenden Erfindung ist demgemäß ein Verfahren zur Herstellung eines sinterfähigen Keramikpulvers, dadurch gekennzeichnet, daß man das Polysilazan der Formel (I)

[CH₃SiHNH]ₙ[CH₃SiN]ₙ

mit n = 10 bis 12 in einem organischen Lösungsmittel löst, in dieser Lösung ein pulverförmiges Sinterhilfsmittel suspendiert, dann das Lösungsmittel Verdampft und den Rückstand in Schutzgasatmosphäre bei 500 bis 1600°C pyrolysiert, und dann in einem aprotischen Lösungsmittel mahlt.

Das eingesetzte Polysilazan kann nach US-A-4 482 669 wie folgt hergestellt werden:
1. Ammonolyse von CH₃HSiCl₂ zu tri- und tetrameren ringförmigen Silazanen [CH₃SiHNH]_{3,4}
2. Vernetzung der ringförmigen Silazane mit Hilfe basischer Katalysatoren wie KH zu Polysilazanen: 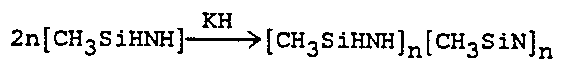
Das auf diese Weise synthetisierte Polysilazan fällt als farbloser Feststoff an, weist Molekulargewichte zwischen 1000 und 1300 g/Mol auf und ist in organischen Lösungsmitteln löslich. Vorzugsweise verwendet man Tetrahydrofuran (THF), Toluol oder Hexan.

Als Sinterhilfsmittel verwendet man im allgemeinen ein oder mehrere der folgenden Stoffe:
Erdalkalielemente, Al, Y, Seltene Erdenelemente, Ti, Zr, Hf, Nb, Ta, Cr, und zwar in Form ihrer Oxide, Alkoholate, Nitrate, Acetate, Acetylacetonate, Carbonate, Oxalate oder Halogenide. Bevorzugt unter den genannten Stoffen sind die Oxide von Mg, Al, Y, Dy, Ho, Er, Tm, Yb, Ti, Zr, Hf. Besonders bevorzugt sind die Oxide von Mg, Al, Y, Yb, Ti.

Die Menge an Sinterhilfsmittel beträgt vorzugsweise 0.02 bis 0.2 mol pro 100 g Polysilazan.

Das Polysilazan wird zunächst in einem organischen Lösungsmittel gelöst. In dieser Lösung wird das pulverförmige Sinterhilfsmittel suspendiert. Zur besseren Dispergierung der Feststoffteilchen kann eine Ultraschallbehandlung der Suspension nachgeschaltet werden. Durch langsames Eindampfen des Lösungsmittels bei Normaldruck oder Unterdruck erfolgt die homogene Abscheidung des Polymers auf die Feststoffteilchen. Der so erhaltene Rückstand wird anschließend in Schutzgasatmosphäre bei 500 - 1600°C, vorzugsweise 800 - 1200°C pyrolysiert. Als Schutzgas wird dabei vorzugsweise N₂, Ar, NH₃ oder H₂ oder ein Gemisch dieser Gase eingesetzt, insbesondere N₂, Ar oder NH₃ oder deren Gemische.

Aus dem so erhaltenen Keramikpulver kann man Si₃N₄- oder Si₃N₄-SiC-Sinterkörper herstellen, indem man das Pulver in einem aprotischen Lösungsmittel mahlt, gegebenenfalls siebt, einem Formkörper daraus formt und diesen sintert.

Ein weiterer Gegenstand der Erfindung ist daher ein Verfahren zur Herstellung einer Siliziumnitridkeramik, dadurch gekennzeichnet, daß man das Polysilazan der Formel (I)

[CH₃SiHNH]ₙ[CH₃SiN]ₙ

mit n = 10 bis 12 in einem organischen Lösungsmittel löst, in dieser Lösung ein pulverförmiges Sinterhilfsmittel suspendiert, dann das Lösungsmittel verdampft, den Rückstand in Schutzgasatmosphäre bei 500 bis 1600°C pyrolysiert, in einem aprotischen Lösungsmittel mahlt, aus dem gemahlenen Produkt einen Formkörper formt und diesen bei 1700 - 2000°C in N₂-Atmosphäre bei 1 bis 150 bar sintert.

Man kann aber auch einen Si₃N₄- oder Si₃N₄-SiC-Sinterkörper dadurch herstellen, daß man zunächst vorgeht wie bei der erfindungsgemäßen Herstellung des Keramikpulvers, aber den nach Verdampfen des Lösungsmittels erhaltenen Rückstand noch nicht pyrolysiert, sondern zunächst daraus einen Formkörper formt und dann diesen pyrolysiert und sintert.

Ein weiterer Gegenstand der Erfindung ist daher ein Verfahren zur Herstellung einer Siliziumnitridkeramik, dadurch gekennzeichnet, daß man das Polysilazan der Formel (I)

[CH₃SiHNH]ₙ[CH₃SiN]ₙ

mit n 10 bis 12 in einem organischen Lösungsmittel löst, in dieser Lösung ein pulverförmiges Sinterhilfsmittel suspendiert, dann das Lösungsmittel verdampft, aus dem Rückstand einen Formkörper formt, diesen in Schutzgasatmosphäre bei 500 bis 1600°C pyrolysiert und dann bei 1750 bis 2000°C in N₂-Atmosphäre bei 1 bis 150 bar sintert.

Bei beiden Arten der Herstellung einer Siliziumnitridkeramik wird die Sinterung vorzugsweise bei 1700 - 1850°C in N₂-Atmosphäre bei 1 - 10 bar durchgeführt.

Der maximal zu erwartende SiC-Gehalt des Pyrolysats aufgrund der elementaren Zusammensetzung des Polysilazans liegt bei 22 Gew.-%, wenn der gesamte N-Gehalt zu Si₃N₄ reagiert. Bei der Pyrolyse unter Ar oder N₂ bis 1000°C entsteht jedoch zusätzlich elementarer Kohlenstoff. Dieser reagiert bei den höheren Temperaturen, die insbesondere beim anschließenden Sintern angewandt werden, mit einem Teil des zunächst entstandenen Si₃N₄ unter Bildung von SiC und N₂. Aus diesem Grund haben die Sinterkörper, die mittels Pyrolyse unter Ar oder N₂ hergestellt werden, SiC-Gehalte von mehr als 22 Gew.-%, maximal 43 Gew.-%. Dagegen wird bei der Pyrolyse des Polysilazans unter NH₃-Atmosphäre reines Si₃N₄ gebildet. Auf diese Weise lassen sich je nach Wahl der Pyrolyseatmosphäre (NH₃, N₂, H₂, Ar oder deren Gemische) SiC-Gehalt zwischen 0 und 43 Gew.-% in den Si₃N₄/SiC-Sinterkörpern einstellen.

Das Gefüge des Si₃N₄/SiC-Verbundkörpers ist dadurch charakterisiert, daß aufgrund der dispergierten SiC-Teilchen das Kornwachstum der Si₃N₄-Matrix stark gehemmt ist. Die Si₃N₄-Körner weisen eine elongierte Kornform mit Korndurchmessern kleiner 1 µm und einem Verhältnis Kornlänge:Korndurchmesser= 5:1 bis 10:1 auf. Der mittlere Korndurchmesser der ungefähr äquiachsialen SiC-Körner ist kleiner 0.8 µm.

Das erfindungsgemäß hergestellte sinterfähige Keramikpulver enthält 40-55 Gew.-% Si, 0.05-25 Gew.-% C, 10-35 Gew.-% N, 5-15 Gew.-% 0 und 2-10 Gew.-% eines oder mehrerer der Elemente Mg, Al, Y, Dy, Ho, Er, Tm, Yb, Ti, Zr, Hf, wobei sämtliche genannten Elemente in den Pulverteilchen homogen verteilt sind und vor allem Si, C und N als amorphes Material gebunden sind. Die bevorzugten unter den neben Si, C, N und O vorhandenen Elementen sind Mg, Al, Y, Dy, Ho, Er, Tm, Yb, Ti, Zr, Hf. Insbesondere Mg, Al, Y, Yb, Ti sind geeignet, vor allem in einem Gehalt von 2-10 Gew.-% im sinterfähigen Keramikpulver.

Bevorzugt ist weiter ein Gehalt von 5 bis 25 Gew.-% C, der sich, wie oben erwähnt, über die Zusammensetzung des Schutzgases bei der Pyrolyse einstellen läßt.

Die erfindungsgemäß hergestellte Siliziumnitridkeramik ist sehr dicht, mit einer maximalen Porosität von 3 %. Vorzugsweise besteht sie aus 10-60 Gew.-% kristallinem SiC, 35-85 Gew.-% kristallinem Si₃N₄ und 3-20 Gew.-% amorpher oder teilweise kristalliner Zwischenkornphase, welche die Sinteradditive und Sauerstoff enthält. Die Zusammensetzung läßt sich wieder über die Zusammensetzung des Schutzgases bei der Pyrolyse steuern.

Die erfindungsgemäße Siliziumnitridkeramik kann zur Herstellung von Bauteilen für starke mechanische, thermische und korrosive Beanspruchung verwandt werden.

### Beispiel 1

### Herstellung eines sinterfähigen Keramikpulvers.

In einem Einhalskolben mit Hahn wurden unter Argon-Schutzgas 80 g des Polysilazans [CH₃SiHNH]ₙ[CH₃SiN]ₙ (n= 10 bis 12) in 300 ml THF gelöst. In dieser Lösung wurden 8,4 g Al₂O₃ und 3,6 g Y₂O₃ suspendiert. Nach anschließender Ultraschallbehandlung wurde unter kräftigem Rühren das THF bei Raumtemperatur und 10⁻² mbar abdestilliert. Der erhaltene Rückstand wurde dann in einem Quarzrohr mit Hahn unter fließendem Argon pyrolysiert. Die Aufheizrate betrug bis 550°C 4 K/min. Da bei dieser Temperatur Zersetzung eintritt, wurde eine Haltezeit von 1 h eingelegt. Zur Vervollständigung der Pyrolyse wurde das Pyrolysat mit einer Aufheizrate von 4 K/min auf 1000°C erhitzt und dort 1 h gehalten. Man erhielt einen röntgenamorphen Rückstand, bestehend aus 85 Gew.-% Pyrolysat, 10,5 Gew.-% Al₂O₃ und 4,5 Gew.-% Y₂O₃ mit folgender elementaranalytischer Zusammensetzung (in Gew.-%): Si (51,0 %), C (12,4 %), N (19,4%), 0 (8,8 %), Al (5,6 %), Y (2,8 %). Das erhaltene Pyrolysat wurde 3 h in n-Hexan attritiert. Dadurch wurden die während der Pyrolyse gebildeten harten Agglomerate zerstört. Das attritierte Pyrolysat besaß eine mittlere Teilchengröße von 0,7 µm und wies eine BET-Oberfläche von 17m²/g auf.

### Beispiel 2

### Herstellung einer Siliziumnitridkeramik

Das nach Beispiel 1 hergestellte sinterfähige Keramikpulver wurde gesiebt (Maschenweite d= 160 µm), kaltisostatisch mit 640 MPa gepreßt und gesintert. Das Sintern des Preßlings (Durchmesser= 10 mm, Höhe= 12 mm) erfolgte drucklos unter stehendem Stickstoff mit einer Aufheizrate von 20 K/min bis 1750°C und einer Haltezeit von 1 h. Eine simultane Dilatometeraufzeichnung zeigte, daß oberhalb 1750°C keine weitere Verdichtung eintrat. Die Sinterdichte betrug 3,2 g/cm³, entsprechend 97 % der Theorie, bei der Annahme einer theoretischen Dichte von 3,33 g/cm³. Durch elementaranalytische Bestimmung des C-Gehaltes wurde ein SiC-Anteil von 23 Gew.-% im gesinterten Si₃N₄/SiC-Körper ermittelt. Das Gefüge des Verbundkörpers wies mittlere Korngrößen von 0,4 µm auf. Die maximalen Korngrößen lagen bei ca. 1 µm.

## Patentansprüche

1. Verfahren zur Herstellung eines sinterfähigen Keramikpulvers, dadurch gekennzeichnet, daß man das Polysilazan der Formel (I)
[CH₃SiHNH]ₙ[CH₃SiN]ₙ
mit n = 10 bis 12 in einem organischen Lösungsmittel löst, in dieser Lösung ein pulverförmiges Sinterhilfsmittel suspendiert, dann das Lösungsmittel verdampft und den Rückstand in Schutzgasatmosphäre bei 500 bis 1600°C pyrolysiert, und dann in einem aprotischen Lösungsmittel mahlt.

2. Verfahren zur Herstellung einer Siliziumnitridkeramik, dadurch gekennzeichnet, daß man das Polysilazan der Formel (I)
[CH₃SiHNH]ₙ[CH₃SiN]ₙ
mit n = 10 bis 12 in einem organischen Lösungsmittel löst, in dieser Lösung ein pulverförmiges Sinterhilfsmittel suspendiert, dann das Lösungsmittel verdampft, den Rückstand in Schutzgasatmosphäre bei 500 bis 1600°C pyrolysiert, in einem aprotischen Lösungsmittel mahlt, aus dem gemahlenen Produkt einen Formkörper formt und diesen bei 1700 - 2000°C in N₂-Atmosphäre bei 1 bis 150 bar sintert.

3. Verfahren zur Herstellung einer Siliziumnitridkeramik, dadurch gekennzeichnet, daß man das Polysilazan der Formel (I)
[CH₃SiHNH]ₙ[CH₃SiN]ₙ
mit n = 10 bis 12 in einem organischen Lösungsmittel löst, in dieser Lösung ein pulverförmiges Sinterhilfsmittel suspendiert, dann das Lösungsmittel verdampft, aus dem Rückstand einen Formkörper formt, diesen in Schutzgasatmosphäre bei 500 bis 1600°C pyrolysiert und dann bei 1700 bis 2000°C in N₂-Atmosphäre bei 1 bis 150 bar sintert.

4. Verfahren nach Anspruch 2 oder 3, dadurch gekennzeichnet, daß man bei 1750 bis 1850°C in N₂-Atmosphäre bei 1 bis 10 bar sintert.

5. Verfahren nach einem der Ansprüche 1 bis 4, dadurch gekennzeichnet, daß man bei 800 bis 1200°C pyrolysiert.

6. Verfahren nach einem der Ansprüche 1 bis 5, dadurch gekennzeichnet, daß man als Lösungsmittel für das Polysilazan Toluol, Hexan oder THF benutzt.

7. Verfahren nach einem der Ansprüche 1 bis 6, dadurch gekennzeichnet, daß man als Sinterhilfsmittel ein oder mehrere der Elemente Mg, Al, Y, Dy, Ho, Er, Tm, Yb, Ti, Zr, Hf in Form ihrer Oxide, Alkoholate, Nitrate, Acetate, Acetylacetonate, Carbonate, Oxalate oder Halogenide einsetzt.

8. Verfahren nach Anspruch 7, dadurch gekennzeichnet, daß man ein oder mehrere der Elemente Mg, Al, Y, Yb, Ti in Form ihrer Oxide einsetzt.

9. Verfahren nach Anspruch 7 oder 8, dadurch gekennzeichnet, daß man 0.02 bis 0.2 mol des Sinterhilfsmittels pro 100 g Polysilazan einsetzt.

10. Verfahren nach einem der Ansprüche 1 bis 9, dadurch gekennzeichnet, daß man als Schutzgas bei der Pyrolyse N₂, Ar, NH₃ oder ein Gemisch dieser Gase einsetzt.

11. Sinterfähiges Keramikpulver, erhältlich nach dem Verfahren gemäß einem der Ansprüche 1 und 5 bis 10 und enthaltend 40-55 Gew.-% Si, 0.05-25 Gew.-% C, 10-35 Gew.-% N, 5-15 Gew.-% 0 und 2-10 Gew.-% eines oder mehrerer der Elemente Mg, Al, Y, Dy, Ho, Er, Tm, Yb, Ti, Zr, Hf, wobei das Si₃N₄ oder Si₃N₄/SiC auf den Pulverteilchen des Sinterhilfsmittels homogen verteilt ist und Si, C und N als amorphes Material gebunden sind.

12. Sinterfähiges Keramikpulver nach Anspruch 11, enthaltend 2-10 Gew.-% eines oder mehrerer der Elemente Mg, Al, Y, Yb,Ti.

13. Sinterfähiges Keramikpulver nach einem der Ansprüche 11 bis 12, enthaltend 5 bis 25 Gew.-% C.

## Claims

1. A process for the preparation of a sinterable ceramic powder which comprises dissolving the polysilazane of formula (I)
[CH₃SiHNH]ₙ[CH₃SiN]ₙ
where n = 10 to 12, in an organic solvent, suspending a pulverulent sinter aid in this solution and then evaporating the solvent and pyrolyzing the residue in an inert gas atmosphere at 500 to 1600°C, and then grinding the pyrolysis product in an aprotic solvent.

2. A process for the manufacture of a silicon nitride ceramic which comprises dissolving the polysilazane of formula (I)
[CH₃SiHNH]ₙ[CH₃SiN]ₙ
where n = 10 to 12, in an organic solvent, suspending a pulverulent sinter aid in this solution, then evaporating the solvent, pyrolyzing the residue in an inert gas atmosphere at 500 to 1600°C, grinding the pyrolysis product in an aprotic solvent, forming a shaped article from the ground product and sintering said article at 1700-2000°C in an N₂ atmosphere at 1 to 150 bar.

3. A process for the manufacture of a silicon nitride ceramic which comprises dissolving the polysilazane of formula (I)
[CH₃SiHNH]ₙ[CH₃SiN]ₙ
where n = 10 to 12, in an organic solvent, suspending a pulverulent sinter aid in this solution, then evaporating the solvent, forming a shaped article from the residue, pyrolyzing said article in an inert gas atmosphere at 500 to 1600°C and then sintering it at 1700 to 2000°C in an N₂ atmosphere at 1 to 150 bar.

4. The process as claimed in claim 2 or 3, wherein the sintering step is carried out at 1750 to 1850°C in an N₂ atmosphere at 1 to 10 bar.

5. The process as claimed in any of claims 1 to 4, wherein the pyrolysis step is carried out at 800 to 1200°C.

6. The process as claimed in any of claims 1 to 5, wherein toluene, hexane or THF is used as the solvent for the polysilazane.

7. The process as claimed in any of claims 1 to 6, wherein one or more of the elements Mg, Al, Y, Dy, Ho, Er, Tm, Yb, Ti, Zr and Hf, in the form of their oxides, alcoholates, nitrates, acetates, acetylacetonates, carbonates, oxalates or halides, are used as sinter aids.

8. The process as claimed in claim 7, wherein one or more of the elements Mg, Al, Y, Yb and Ti are used in the form of their oxides.

9. The process as claimed in claim 7 or 8, wherein 0.02 to 0.2 mol of the sinter aid is used per 100 g of polysilazane.

10. The process as claimed in any of claims 1 to 9, wherein N₂, Ar, NH₃ or a mixture of these gases is used as the inert gas during pyrolysis.

11. A sinterable ceramic powder obtainable by the process as claimed in any of claims 1 and 5 to 10 and containing 40-55% by weight of Si, 0.05-25% by weight of C, 10-35% by weight of N, 5-15% by weight of O and 2-10% by weight of one or more of the elements Mg, Al, Y, Dy, Ho, Er, Tm, Yb, Ti, Zr and Hf, the Si₃N₄ or Si₃N₄/SiC being homogeneously distributed on the powder particles of the sinter aid and Si, C and N being bound as amorphous material.

12. A sinterable ceramic powder as claimed in claim 11, containing 2-10% by weight of one or more of the elements Mg, Al, Y, Yb and Ti.

13. A sinterable ceramic powder as claimed in any of claims 11 to 12, containing 5 to 25% by weight of C.

## Revendications

1. Procédé de préparation d'une poudre de céramique frittable, caractérisé en ce qu'on dissout dans un solvant organique le polysilazane de formule (I)
[CH₃SiHNH]ₙ[CH₃SiN]ₙ
avec n valant de 10 à 12, on met en suspension dans cette solution un agent auxiliaire de frittage se trouvant sous la forme de poudre, on évapore alors le solvant et on pyrolyse le résidu sous une atmosphère de gaz protecteur à une température comprise entre 500 et 1600°C, le résidu étant ensuite broyé dans un solvant aprotique.

2. Procédé de préparation d'une céramique en nitrure de silicium, caractérisé en ce qu'on dissout dans un solvant organique le polysilazane de formule (I)
[CH₃SiHNH]ₙ[CH₃SiN]ₙ
avec n valant de 10 à 12, on met en suspension dans cette solution un agent auxiliaire de frittage se trouvant sous la forme de poudre, on évapore alors le solvant, on pyrolyse le résidu dans une atmosphère de gaz protecteur à une température comprise entre 500 et 1600°C, on broie dans un solvant aprotique, on moule une pièce à partir du produit broyé que l'on fritte à une température comprise entre 1700 et 2000°C sous une atmosphère de N₂ sous une pression comprise entre 1 et 150 bar.

3. Procédé de préparation d'une céramique en nitrure de silicium, caractérisé en ce qu'on dissout dans un solvant organique le polysilazane de formule (I)
[CH₃SiHNH]ₙ[CH₃SiN]ₙ
avec n valant de 10 à 12, on met en suspension dans cette solution un agent auxiliaire de frittage se trouvant sous la forme d'une poudre, on évapore alors le solvant, on moule une pièce moulée à partir du résidu, on le pyrolyse sous une atmosphère de gaz protecteur à une température comprise entre 500 et 1600°C et on le fritte alors à une température comprise entre 1700 et 2000°C sous une atmosphère de N₂ sous une pression comprise entre 1 et 150 bar.

4. Procédé selon la revendication 2 ou 3, caractérisé en ce qu'on fritte à une température comprise entre 1750 et 1850°C sous une atmosphère de N₂ à une pression comprise entre 1 et 10 bar.

5. Procédé selon l'une des revendications 1 à 4, caractérisé en ce qu'on pyrolyse à une température comprise entre 800 et 1200°C.

6. Procédé selon l'une des revendications 1 à 5, caractérisé en ce qu'on utilise, en tant que solvant pour le polysilazane, du toluène, de l'hexane ou du THF.

7. Procédé selon l'une des revendications 1 à 6, caractérisé en ce qu'on utilise, en tant qu'agent auxiliaire de frittage, un ou plusieurs des éléments Mg, Al, Y, Dy, Ho, Er, Tm, Yb, Ti, Zr, Hf sous la forme de leur oxyde, alcoolate, nitrate, acétate, acétylacétonate, carbonate, oxalate ou halogénure.

8. Procédé selon la revendication 7, caractérisé en ce qu'on utilise un ou plusieurs des éléments Mg, Al, Y, Yb, Ti sous la forme de leur oxyde.

9. Procédé selon la revendication 7 ou 8, caractérisé en ce qu'on utilise de 0,02 à 0,2 mol de l'agent auxiliaire de frittage pour 100 g de polysilazane.

10. Procédé selon l'une des revendications 1 à 9, caractérisé en ce qu'on utilise, en tant que gaz protecteur pour la pyrolyse, N₂, Ar, NH₃ ou un mélange de ces gaz.

11. Poudre de céramique frittable, que l'on peut obtenir selon le procédé conforme à l'une des revendications 1 et de 5 à 10 et contenant de 40 à 55% en poids de Si, de 0,05 à 25% en poids de C, de 10 à 35% en poids de N, de 0,5 à 15% en poids de O et de 2 à 10% en poids d'un ou de plusieurs des éléments Mg, Al, Y, Dy, Ho, Er, Tm, Yb, Ti, Zr, Hf, Si₃N₄ ou Si₃N₄/SiC étant réparti de manière homogène sur les particules de poudre de l'agent auxiliaire de frittage et Si, C et N sont combinés en tant que matériels amorphes.

12. Poudre de céramique frittable selon la revendication 11 contenant de 2 à 10% en poids d'un ou de plusieurs des éléments Mg, Al, Y, Yb, Ti.

13. Poudre de céramique frittable selon l'une des revendications 11 et 12 contenant de 5 à 25% en poids de C.
